# EUROPEAN PATENT SPECIFICATION

(11) **EP 1 295 930 B1**
(45) Date of publication and mention of the grant of the patent: **27.07.2011**
(21) Application number: 02256465.2
(22) Date of filing: 18.09.2002
(51) Int. Cl.: C10G 9/20

(54) **Pyrolysis furnace with new type radiant tubes arrangement and method of its operation and usage**
Pyrolyseofen mit neuartiger Strahlrohrordnung und entsprechendes Betriebsverfahren und Verwendung
Four de pyrolyse équipé d'un nouveau type d'arrangement de tubes radiants et son procédé de fonctionnement et usage

(30) Priority: 19.09.2001 CN 01141772
(43) Date of publication of application: 26.03.2003
(73) Proprietor: China Petroleum & Chemical Corporation, Beijing 100029 (CN); Beijing Research Institute of Chemical Industry, SINOPEC, Beijing 100013 (CN)
(72) Inventor: Zeng, Qingquan, Chaoyang District, Beijing 100013 (CN); Wang, Guoqing, Chaoyang District, Beijing 100013 (CN); Xu, Shixing, Chaoyang District, Beijing 100013 (CN); Zhang, Zhaobin, Chaoyang District, Beijing 100013 (CN)
(74) Representative: Daniels, Jeffrey Nicholas

(56) References cited:
- EP-A- 0 519 230
- WO-A-98/51761
- FR-A- 2 133 306
- GB-A- 1 307 846
- US-A- 2 112 224
- US-A- 3 267 915
- US-A- 5 151 158

## Description

### 1. Field of the invention

The invention relates to a pyrolysis furnace and a method for its operation and usage. Specfically the invention relates to a pyrolysis furnace with a new type of arrangement of radiant tubes for a high temperature cracking reaction of hydrocarbons, and a method of its operation and usage.

### 2. Description of the prior art

As is known to all, the pyrolysis reaction of hydrocarbons is the main means for producing very important industrial raw materials such as ethylene, propylene, etc. Even a small improvement in this field can bring about giant economic and social benefits. The pyrolysis furnace is the main piece of equipment for performing high temperature cracking. Therefore, nearly all of the chief hydrocarbon and petrochemical companies of the world pay great attention to, and invest huge amounts in modifications to pyrolysis furnaces.

It is understood by the person skilled in the art that the structure of the radiant tubes, and the uniformity of the heat received by them are important factors affecting the cracking reaction result. In most cases the radiant section of a traditional vertical pyrolysis furnace employs a single row of tubes to ensure the radiant tubes receive uniform heat. There are also some companies that, for the purpose of obtaining larger productivity from a single furnace under lower investment, employ a double row of tubes, or, for the combined feature of both arrangements, employ a staggered row of tubes. The abovementioned information is available from the reference "The technology of ethylene", by Chen Bing (Chemical Industrial Pub. House, 1997, 1 st Ed., Chap. 4) "The theory and technology of pyrolysis for the Hydrocarbons chemistry" by Zhou Ren-juin (Chemical Industrial Pub, House, 1981, 1 st Ed, Chap 6) and "Technique of device for ethylene" by Wong Song-hang (Hydrocarbons Chemical Industrial Pub. House, China, 1994, 1st Ed., Chap 6).

The radiant tubes, employed in a single row arrangement in the radiant section, receive double-wall radiation; they receive the most uniform heat and have the best heat conducting effect. The disadvantage is that the number of tubes capable of being arranged in any area is low, and therefore the productivity of a specific area is low. In order to increase productivity in a pyrolysis furnace with the single row arrangement, it is necessary to extend the length of every radiant tubeor the length of the radiant section. The result is that it is necessary to greatly increase the height and length of the radiant section and to meet the more severe requirement for uniform heat supply to the radiant section by the burners. At same time the use of extremely long radiant tubes creates complicated engineering problems. Therefore, the use of a single row arrangement structure significantly limits the productivity of a pyrolysis furnace.

Although the use of a double row arrangement of radiant tubes can increase the productivity by 70%, the mutual overlap between the tubes of a double row seriously affects the heat conductivity of a heater wall from its radiation. This results in worse conductive effect from radiation at the same time, non-uniform heat receipt of radiant tubes brings about disadvantages to cracking selectivity, employment cycle, and lifetime of radiant tubes.

The use of a staggered row arrangement can partly increase the productivity and the uniformity of the heat received,. However, in order to ensure uniformity of radiant conduction, the distance between adjacent radiant tubes must not be lower than 1.8 times the outer diameter thereof. Accordingly, the space saved within the furnace chamber is limited. In addition, in order to avoid the mutual cross-linking of radiant tube bends in adjacent groups and manifolds in the lower portion of the furnace chamber, the bends of adjacent groups and manifolds have to be located at different heights or on different planes. This leads to two effects. Firstly, if the radiant tubes are located at different heights the tubes in various groups have different overall lengths, and therefore the feedstock in the different groups of tubes is retained for different lengths of time and experiences different severities of cracking.This places certain limitations on the control of optimisation. Secondly, , locating bends and manifolds on different planes significantly affects the stress to all of the radiant tubes, and may easily cause their deformation. Moreover, this necessitates the use of a complicated design for the radiant tube bends and multiple types of radiant tube, and results in bad interchangeability, great difficulty in mounting and increased investment.

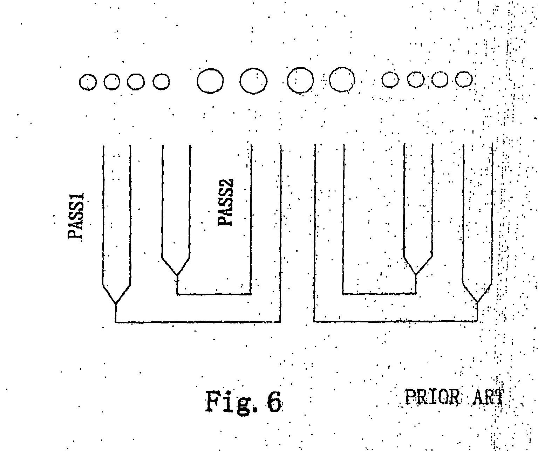

Fig. 6 shows an arrangement from the prior art of two pass branched radiant tubes with different diameters of type 2-1 in the radiant section, wherein the first pass and second pass tubes are located in a same plane. This is a single row arrangement. It can be seen that, although the tubes receive heat uniformly,only a few tubes can be arranged in the radiant section - the space utilization is not high. In addition, the arrangement of tubes is not symmetrical and tube lengths are not the same. This leads to different working conditions of the cracking process in various tubes, and thus the cracking effect is affected.

The high temperature conditions of the cracking reaction are achieved by the burners which supply heat to the radiant tubes in the radiant section. In accordance with the location in which they are mounted in the radiant section, the burners are divided into bottom burners, wall burners and top burners.

In US 4361478 the company LINDE discloses a pyrolysis furnace in which the heat is supplied entirely from wall burners. The pyrolysis furnace employing this manner of heat supply has the features of uniform temperature distribution in the furnace chamber, a small width of furnace chamber, etc. However, too many burners are located in the whole pyrolysis furnace, the distribution piping for the fuel is complicated, investment is large, and its employment and maintenance in practice are an expensive matter.

In US 499 9089 the Japanese company MITSUI discloses a pyrolysis furnace in which the heat is supplied entirely from top burners. In this type of furnace the structure of the radiant section is irregular, and the form of the fuel current in the furnace chamber is complicated. Moreover, the heater wall in the radiant section is tilted and, under the high temperature conditions employed, the isolation lining materials of the heater wall are prone to break-up, resulting in the need for great amount of repair. Besides, since the outlet of the fuel gas is located in the bottom portion of the radiant section, a high-powered extraction fan is needed to provide for the back current of fuel gas in the radiant section, and such a furnace has increased costs and energy consumption.

In US 5151158 the company S & W describes a pyrolysis furnace in which the heat is supplied entirely from bottom burners. This is advantageous in its simple employment, and its requirement for only a minimum amount of maintenance. However, the required specification for the burners is relative high. When the height of the radiant section of the furnace chamber is higher it is necessary to have some specially designed burners to meet the uniform temperature requirement in the furnace chamber. These burners are complex to manufacture and expensive.

In US 4342642 the company LUMMUS discloses a pyrolysis furnace with a combined bottom-wall heat supply. This manner of heat supply can obtain uniform temperature in the furnace chamber by means of conventional bottom or wall burners. However, the use of wall burners still creates problems, such as the need for complex distribution piping, large investment and high cost of employment and maintenance etc,.

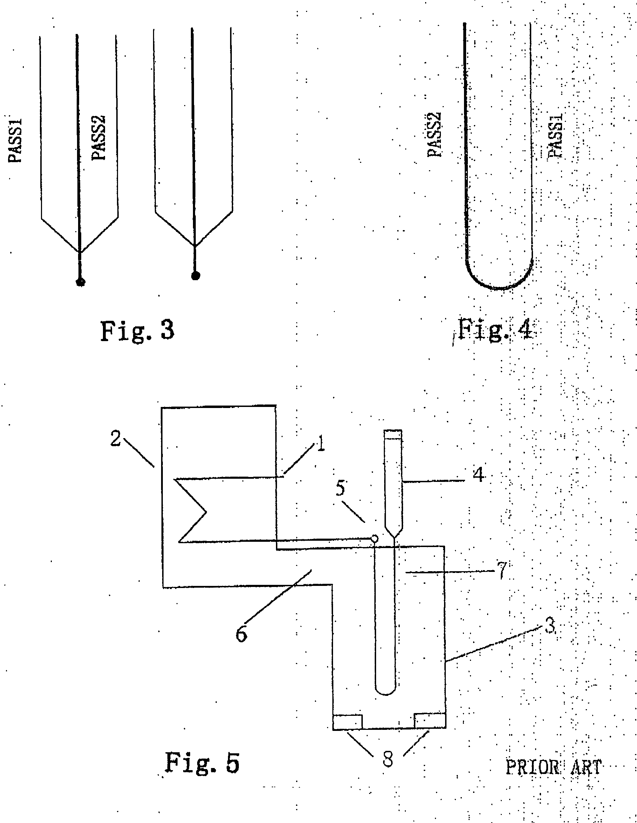

The abovementioned pyrolysis furnace of the prior art generally comprises: a convection section, used for preheating the hydrocarbon feed stock; a radiant section, used for high temperature cracking of the hydrocarbon feedstock; and a crossover section, connecting the convection section and the radiant section. A typical pyrolysis furnace with bottom burners is shown in Fig. 5, wherein the bottom burners (8) and multiple groups of radiant tubes (7) are arranged in a radiant section (3); the convection section, in which multiple groups of convection tubes (1) are arranged, is located above the radiant section and axially shifted there from; a crossover section (6) passes horizontally from the top portion of the radiant section to connect with the bottom portion of the convection section. The above mentioned pyrolysis furnace of the prior art has a greater overall height, increasing design and technology difficulties and resulting in larger amount of capital expenditure, at same time.

To sum up, all the furnaces of the prior art have their advantages, but they also have many shortfalls and problems. Therefore, it is necessary to seek a new type of pyrolysis furnace with excellent composite properties, to overcome the above described shortfalls.

### SUMMARY OF THE INVENTION

The object of the present invention is to provide a pyrolysis furnace with a new type of radiant tube arrangement within the radiant section, which has the features of simple employment, excellent heat conduction, small investment, easy maintenance, and flexible control.

In order to realize the above object, the inventor has carried out a great deal of careful investigation and found that the employment of a new type of design of radiant tube arrangement within the radiant section, which has never been used by others, is an effective means of solving the abovementioned problems.

The present invention provides a pyrolysis furnace with new type radiant tubes arrangement, comprising:
a) vertically arranged radiant section (3), in which burners and multiple groups of radiant tubes (7) are arranged for high temperature cracking hydrocarbons feedstock;
b) vertically arranged convection section (2), located above the radiant section and axially shifted therewith, in said convection section multiple groups of convention tubes (1) are arranged for preheating the hydrocarbons feedstock;
c) horizontally arranged crossover section (6), connected between said radiant section (3) and said convection section (2); characterized in that,
said multiple groups radiant tubes (7) are type 2-1 or type 4-1 of two pass branched tubes with the diameter of the first pass tubes being different from the diameter of the second pass tubes, the first pass tubes and second pass tubes in various groups are located at two parallel planes, and the projection of each second pass tube is corresponding to the center location of the projection connecting line of the two first pass tubes adjacent therewith, the structure of each first pass tube and second pass tube is the same.

In order to resolve the problem of arrangement and uniform heat receipt of the radiant tubes, said radiant tubes are two pass branched tubes with different diameters (type 2-1, 4-1), wherein the two pass branched tubes with different diameters of type 2-1 are particularly preferred. The pitch between two adjacent radiant tubes in the same plane is 1.8-6.0 times the outer diameter of the radiant tubes, preferably, 1.8-4.2 times, more preferably, 2.0-2.8 times The distance between the planes where said first pass tubes and second pass tubes are located is 100-600mm, preferably 200-500mm, most preferably 300-400mm.

The pyrolysis furnace of this invention may also employ a new manner of heat supply, wherein top burners and bottom burners are simultaneously arranged in said radiant section, and said crossover section is extended from the middle-upper portion of the radiant section wall, and connected to the bottom portion of the convection section.

A further object of the present invention is to provide a method of high temperature cracking of hydrocarbon feedstock using said pyrolysis furnace, including: preheating the hydrocarbon feedstock and dilution steam mixture, etc, in convection tubes by means of the fuel gas coming from the radiant section; high temperature cracking of the preheated hydrocarbon feedstock, wherein the heat supply ability of the bottom burners is maintained at a constant level, and the heat supply ability of top burners is regulated within a small range, to satisfy different temperature requirements for cracking different kinds of hydrocarbon feedstock.

### BRIEF DESCRIPTION OF THE DRAWINGS

The present invention will be better understood through its description in reference to the following drawings, in which:
Fig. 1 is a diagrammatic elevation view of a new type of pyrolysis furnace according to the present invention;
Fig. 2 is a top view of a radiant section of a pyrolysis furnace according to the present invention including, as an example, the radiant tubes of type 2-1;
Fig. 3 is an elevation view of Fig. 2 wherein two groups of radiant tubes are shown,
Fig. 4 is a side view of Fig- 2;
Fig. 5 is a diagrammatic view of a typical pyrolysis furnace from the prior art, employing a bottom burner heat supply;
Fig. 6 is a diagrammatic top view and elevation view of a single row arrangement of radiant tubes in a pyrolysis furnace of the prior art.

### DETAILED DESCRIPTION OF THE PREFERRED EMBODIMENTS

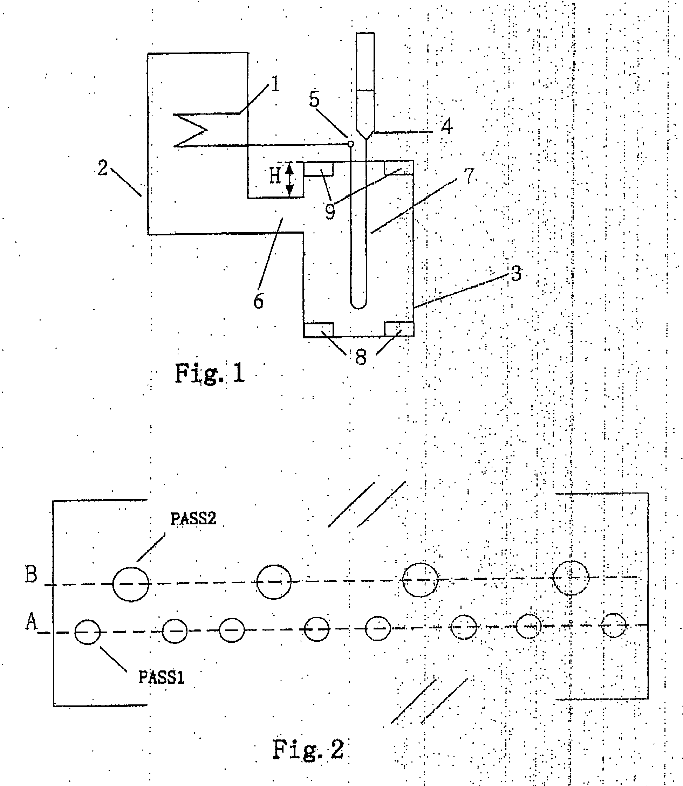

As Fig. 1 shows, the new type of pyrolysis furnace of this invention comprises a radiant section (3); bottom burners (8), arranged in the radiant section (3); multiple groups of two pass branched tubes with different diameters (type 2-1, 4-1) (7), vertically arranged in the radiant section; wherein, "tubes with different diameters" means that the first pass tube and the second pass tube in a two pass tube have different diameters, but two or four first pass tubes in two pass tubes type 2-1, 4-1 should have the same diameter; a convection section (2), offset from the radiant section (3); multiple groups of convection tubes (1), horizontally arranged in the convection section (2); and a crossover section (6), horizontally arranged between the radiant section (3) and the convection section (2);

The feedstock for cracking is introduced from the convection tube (1), in the convection section of the furnace, through the crossover tube (5) of the convection tube (1) into the radiant tubes (7), then successively passed through the first pass tubes (which can consist of 2 or 4 tubes) of the radiant tubes (7), to the second pass tube (1 tube), and at last passes from the outlet of the second pass tube of the radiant tubes (7) into the Transfer Line Exchange (TLE) (4).

In order to resolve the problem of radiant tube construction, arrangement, and uniform heat receipt, said radiant tubes are two pass branched tubes with different diameters (type 2-1, type 4-1), wherein the two pass branched tubes with different diameters (type 2-1) are particularly preferred.

The first pass tubes and second pass tubes of the various groups are located in two parallel planes, and the projection of each of the second pass tubes corresponds to the centre location of a projection connecting line of the two first pass tubes, adjacent therewith. The structure of each first tube and second tube is the same. The pitch between two adjacent radiant tubes in the same plane is 1.8 - 6.0 times the outer diameter of the radiant tubes, preferably, 1. 8 - 4.2 times, more preferably, 2. 0 - 2.8 times. The distance between the first pass tubes and the second pass tubes of each group is 100 - 600mm, preferably, 200 - 500mm, most preferably, 300 - 400mm.

Since the present invention employs a new type of arrangement of radiant tubes, so as to make the pitch between two adjacent radiant tubes in the same plane just right, the bends of the radiant tubes of the radiant section in various groups and manifolds are parallel to each other without cross links. This has no influence on the radiant heat conduction of the radiant tubes in various groups. Simultaneously, the form and weight of the bends of the radiant tubes in various groups and manifolds are completely the same. These components have high versatility, and are simple in their manufacture and maintenance. The overall lengths of the various groups of radiant tubes in the radiant section are completely the same, and the residence time and pressure drop of the feedstock are also completely the same, making it easy to employ and control optimisation. The weight of the radiant tubes of various groups in the radiant section is completely the same, making it easy to arrange and regulate the balance and suspension system.

Since this arrangement can reduce the length of the pyrolysis furnace, it is suitable for various traditional or new type TLEs.

In the pyrolysis furnace, according to the present invention, top burners (9) can also be added in the radiant section, as shown in Fig 1. The location of the crossover section (6) can be determined by the top/bottom burners' heat supply ratio, R, of different pyrolysis furnaces. When R varies in a range of 1:9-7:3, the top wall of crossover section is located under the top wall of the radiant section, its distance, H, is 10% - 50% of the total height of the radiant section wall. Preferably, R varies in a range of 2:8 - 6:4, and H is 10% - 40% of the total height of the radiant section wall; more preferably, R varies in a range of 2.5:7.5 - 5:5, and H is 15% - 40% of the total height of the radiant section wall; most preferably, R varies in a range of 3:7 - 4:6, and H is 20% - 40% of the total height of the radiant section wall.

In a pyrolysis furnace according to a preferred embodiment of this invention, said top burners and bottom burners can be used to supply all the heat needed for high temperature cracking. Top burners and bottom burners may be, preferably, combined oil-gas burners.

According to an embodiment of this invention, we can maintain the heat supply ability of the bottom burners constant, while regulating the heat supply ability of the top burners within a small range, so as to satisfy the requirement for high temperature cracking of different kinds of feedstock.

According to a preferred embodiment of this invention, said pyrolysis furnace can employ top burners and bottom burners in equal numbers. The top or bottom burners may be arranged symmetrically about a centre line of the top or bottom portion. The ratio of numbers of top/bottom burners is equal to, and correspond to one another at top and bottom portions. Moreover, the top/bottom burners heat supply ratio, R, can be controlled by controlling the top/bottom burners fuel feeding ratio.

According to a preferred embodiment of this invention, the pyrolysis furnace employs top burners and bottom burners of various kinds, as known to a person skilled in the art. In order to reduce cost, preferably it employs conventional burners.

Since the top burners employ both liquid and gas fuels, or may be an oil-gas combined burner, as compared with the wall burners heat supply or bottom-wall combined heat supply types, the present invention can reduce the number of burners, so as to reduce the investment and simplify the structure of pyrolysis furnace. Moreover, the present invention can use only the conventional burners, as top and bottom burners, which can be produced in our country, and are inexpensive, and simple in their employment and maintenance.

In addition, due to the employment of the top and bottom burner combined heat supply, the temperature distribution is relatively uniform,and at the same time, the top/bottom burners heat supply ratio, R, can be adjusted during the period of design according to the structural requirements. Thus the design flexibility is greatly increased. In addition, by employing a top and bottom burner combined heat supply in the manner of this invention, the outlet of the fuel gas to the cross over section, which is located at the top portion of the radiant section in the traditional art, is shifted down to the middle-upper portion of the radiant section. This does not have any negative influences on the cracking effect of pyrolysis furnace, but allows the height of the convection section (2) to be shifted down, so that the overall height of the pyrolysis furnace may be lowered (by 3 - 6m on average; the particular height is controlled by the top/bottom burners heat supply ratio, R). As a result, the centre of gravity of the whole pyrolysis furnace is dropped down, which reduces the construction cost. Moreover, during practical employment, according to the need for different outlet temperature of various fuel kinds, it can maintain the heat supply ability of the bottom burners as constant, while the heat supply ability of top burners is regulated within a small range, in order to satisfy condition requirements. This greatly increases the furnace's flexibility during practical employment.

Here after, the present invention will be described in more detail by way of examples, however, these examples are not intended to be limitations for this invention. For those skilled in the art, various changes and modifications will be obvious. For example, the pyrolysis furnace employing the radiant tube arrangement in the manner of this invention, but with radiant tubes that are back branched tubes; also for example, a pyrolysis furnace employing a common convection section for two or more radiant sections.

### EXAMPLE 1

A pyrolysis furnace has a yield of ethylene of 100 kilotons per year. Said pyrolysis furnace comprises: a radiant section with a furnace chamber height of about 17m; a convection section offset from said radiant section, with a height of about 15m; a cross over section, horizontally arranged and extending between said radiant and convection sections, the upper edge of the outlet of the crossover section is located about 6m below the top portion of the furnace chamber; 24 top burners, arranged symmetrically about the centre line of the top portion, and 24 bottom burners arranged symmetrically about the centre line of the bottom portion; multiple groups of convection tubes, horizontally arranged in the convection section; and 48 groups of radiant tubes (type 2-1), vertically arranged in the radiant section. Since the location of the crossover section is shifted down about 6m, the overall height of the furnace is reduced by about 6m. In addition, a pyrolysis furnace on the same scale employing a wall and bottom burner combined heat supply needs 24 bottom burners and 48 wall burners.

If the furnace employs a staggered row arrangement of radiant tubes, it is only possible to arrange 48 groups of radiant tubes (of type 2-1). The bends of adjacent groups and manifolds are located at different heights, as well as in different planes. The distance between the tubes is 1.8 times the outer diameter of the radiant tubes, and the length of the furnace chamber is about 20m. In a reconstruction and innovation program, the radiant tubes are arranged in the manner of the present invention, all the first pass tubes are located in one plane, all the second pass tubes are located in another plane, and the distance between the two planes is 320mm. When the distance between the first pass tubes is 2.4 times the outer diameter thereof, and the distance between the second pass tubes is 3.5 times the outer diameter thereof, 64 groups of radiant tubes (of type 2-1) can be arranged in the same furnace chamber. This increases the productivity by 33%.

If, when the radiant tubes are arranged in the manner of the present invention, the distance between the first pass tubes is 2.8 times the outer diameter thereof, and the distance between the second pass tubes is 4.1 times the outer diameter thereof, 54 groups of radiant tubes (of type 2-1) can be arranged in the same furnace chamber. This increases the productivity by 12.5%. In this example, due to the distance between adjacent radiant tubes being increased, a more uniform radiant conduction is obtained. This example is apparently advantageous for revamping old furnaces, and can remarkably increase productivity under conditions of minimum investment.

During high temperature cracking by means of said apparatus, controlling the top/bottom burners heat supply ratio at R=3: 7, the hydrocarbon feedstock and dilution steam mixture passes through multi-path convection tubes (1), horizontally extended in the convection section (2); after recovering the heat of the fuel gas in the convection section and preheating to the temperature of the crossover section, the hydrocarbon feedstock passes through the convection tubes (1) into the cross tube (5); after being distributed in an appropriate current by the distributor, into radiant tubes (7), vertically arranged in the radiant section (3), the cracked product is heat exchanged in the transfer line exchanger (4). The pyrolysis furnace is fully based on the heat supplied by bottom burners (8) and top burners (9), and at same time the fuel gas, produced from the top and bottom burners passes through the horizontally arranged crossover section (6), providing convection heat to the convection section (2).

### EXAMPLE 2

A pyrolysis furnace has a yield of ethylene of 60 kilo-ton per year, said pyrolysis furnace comprising: a radiant section with a furnace chamber height of about 14m; a convection section, offset from said radiant section, with a height of about 14m; a crossover section, horizontally arranged and extended between said radiant section and said convection section; the upper edge of the outlet of the cross over section is located about 3m from the top portion of the furnace chamber; 24 top burners arranged symmetrically about the centre line of the top portion, and 24 bottom burners, arranged symmetrically about the centre line of the bottom portion; and multiple groups of convection tubes, horizontally arranged in the convection section, and 32 groups of radiant tubes (of type 2-1), vertically arranged in the radiant section.

Since the location of the cross over section is shifted down by about 3m, the overall length of the furnace is reduced by about 3m. In addition, a pyrolysis furnace of the same scale, employing a wall and bottom burner combined heat supply, would need to comprise 24 bottom burners and 72 wall burners.

The radiant tubes are arranged in a single row arrangement, the length of furnace chamber is about 15m, and the radiant tubes are two pass non-branched tubes (of type 1-1). In order to avoid the mutual overlap of the radiant tube bends and connecting tubes in the lower portion of the furnace chamber, the distance between the first pass tubes is 2. 8 times the outer diameter thereof, and the distance between the second pass tubes is 2. 3 times the outer diameter thereof. In addition, it is a single row arrangement, and only 48 groups of radiant tubes can be arranged. In a reconstruction design,employing the radiant tube arrangement in the manner of the present invention, all the first pass tubes are located in one plane, all the second pass tubes are located in another plane, and the distance between two planes is 350mm. When the distance between the first pass tubes is 2. 8 times the outer diameter thereof, the distance between the second pass tubes is 2. 3 times the outer diameter thereof, and the radiant tubes are arranged in the manner of the present invention, 108 groups of two pass non-branched tubes with different diameters (of type 1-1) can be arranged. This increases productivity to about 220%. At the same time, the various radiant tubes have uniform heat conduction. In addition, the form and the weight of bends in various groups and manifolds are all the same. These components have high versatility, and all the bends and connecting tubes are arranged in parallel in the lower portion of furnace chamber. There is no interference between the components, making manufacture and maintenance simple.

During high temperature cracking using said apparatus, controlling top/bottom burners heat supply ratio at R= 4:6, the hydrocarbon feed stock and dilution steam mixture passes through the multi-path convection tubes (1), horizontally extended in the convection section (2). After recovering the heat of the fuel gas in the convection section, the hydrocarbon feedstock passes through the convection tubes (1) into the cross tube (5). After being distributed in an appropriate current by the distributor, it passes into the radiant tubes (7), vertically arranged in the radiant section (3). The pyrolysis furnace is fully based on the heatsupplied by the bottom burners (8) and the top burners (9), At the same time, the fuel gas, produced from the top and bottom burners passes through the horizontally arranged crossover section (6), providing convection heat to the convection section (2).

### EXAMPLE 3

A pyrolysis furnace, is the same as the pyrolysis furnace of Example 1, but employing radiant tubes of type 4-1. If a single row of radiation tubes is employed, the distance between the first pass tubes is about 1. 8 times the outer diameter thereof, and the distance between the second pass tubes is about 1.4 times the outer diameter thereof. In this case 32 groups of radiant tubes can be arranged. However, if instead, the arrangement manner of radiant tubes of the present invention is employed, the distance between the first pass tubes is still maintained at 1. 8 times the outer diameter thereof, but the distance between the second pass tubes is increased to 3.8 times the outer diameter there of. In this arrangement all of the first pass tubes are located in one plane, all the second pass tubes are located at another plane, and the distance between two planes is 350mm. This increases the productivity by about 50%. If the distance between the first pass tubes is enlarged to 2. 4 times the outer diameter thereof, the distance between the second pass tubes is enlarged to 5. 1 times of outer diameter there of, and the distance between the first and second pass tubes is 350mm, 36 groups of radiant tubes can be arranged. This increases the productivity by about 12%. In addition, due to the enlargement of the distance between the tubes, the capacity for radiant convection by the radiant tubes is far better than with the radiant tubes in a single row arrangement.

## Claims

1. A pyrolysis furnace with new type radiant tubes arrangement, comprising:
a) vertically arranged radiant section (3), in which burners and multiple groups of radiant tubes (7) are arranged for high temperature cracking hydrocarbons feedstock;
b) vertically arranged convection section (2), located above the radiant section and axially shifted therewith, in said convection section multiple groups of convection tubes (1) are arranged for preheating the hydrocarbons feedstock;
c) horizontally arranged crossover section (6), connected between said radiant section (3) and said convection section (2); **characterized in that**,
said multiple groups radiant tubes (7) are type 2-1 or type 4-1 of two pass branched tubes with the diameter of the first pass tubes being different from the diameter of the second pass tubes, the first pass tubes and second pass tubes in various groups are located at two parallel planes, and the projection of each second pass tube is corresponding to the center location of the projection connecting line of the two first pass tubes adjacent therewith, the structure of each first pass tube and second pass tube is the same.

2. The pyrolysis furnace according to claim 1, wherein the distance between two adjacent radiant tubes (7) is 1.8 - 6.0 times of outer diameter of radiant tubes at the same plane.

3. The pyrolysis furnace according to claim 1, wherein the distance between two adjacent radiant tubes (7) is 1.8 - 4. 2 times of outer diameter of radiant tubes at the same plane.

4. The pyrolysis furnace according to claim 1, wherein the distance between two adjacent radiant tubes (7) is 2.0 - 2.8 times of outer diameter of radiant tubes at the same plane.

5. The pyrolysis furnace according to claim 1, wherein the distance between the planes where said first pass tubes and second pass tubes in every group of radiant tubes (7) are respectively located is 100 - 600mm.

6. The pyrolysis furnace according to claim 1, wherein the distance between the planes where said first pass tubes and second pass tubes in every group of radiant tubes (7) are respectively located is 200 - 500mm.

7. The pyrolysis furnace according to claim 1, wherein the distance between the planes where said first pass tubes and second pass tubes in every group of radiant tubes (7) are respectively located is 300 - 400mm.

8. The pyrolysis furnace according to claim 1, wherein bottom burners (8) and top burners (9) are simultaneously arranged in said radiant section (3), moreover, said crossover section (6) is extended out from a middle-upper portion of side wall of radiant section (3) and connected to bottom portion of convection section (2).

9. The pyrolysis furnace according to claim 8, wherein the top wall of said crossover section (6) is located under the top wail of said radiant section (3), its distance H is determined by the top/bottom burners (9, 8) heat supply ratio R, when R varies in a range of 1:9 - 7: 3, His 10% - 50% of total height of radiant section (3).

10. The pyrolysis furnace according to claim 8, wherein when R varies in a range of 2:8 6: 4, H is 10% - 40% of total height of radiant section (3).

11. The pyrolysis furnace according to claim 8, wherein when R varies in a range of 2.5:7. 5-5: 5, H is 15% - 40% of total height of radiant section (3).

12. The pyrolysis furnace according to claim 8, wherein when R varies in a range of 3:7 4:6, H is 20%-40% of total height of radiant section (3).

13. The pyrolysis furnace according to claim 8, wherein the number of said bottom burners (8) is equal to the number of said top burners (9), the top or bottom burners are arranged symmetrically about centerline of top or bottom portions and corresponding to one another at top or bottom portions respectively.

14. A method of high temperature cracking hydrocarbons feedstock by means of a pyrolysis furnace according to any one of claims 1-13, comprising:
at convection section (2), preheating the hydrocarbons feedstock in radiant tubes (1), utilizing fuel gas of crossover section, came from radiant section (3); at radiant section (3), high temperature cracking the preheated hydrocarbons feedstock in radiant tubes (7), utilizing the heat supplied by top burners (9) and bottom burners (8); wherein maintaining the heat supplied by bottom burners (8) constant, by means of regulating the heat supplied by top burners (9) so as to satisfy the temperature requirements for cracking different hydrocarbons feedstock.

15. The use of pyrolysis furnace according to any one of claims 1-13 for high temperature cracking hydrocarbons.

## Patentansprüche

1. Pyrolyseofen mit einer neuartigen Strahlungsrohranordnung, mit:
a) einem senkrecht angeordneten Strahlungsabschnitt (3), in dem Brenner und mehrere Gruppen von Strahlungsrohren (7) zum Hochtemperaturspalten von Kohlenwasserstoff-Ausgangsmaterial angeordnet sind;
b) einem vertikal angeordneten Konvektionsabschnitt (2), der oberhalb des Strahlungsabschnitts angeordnet und axial zu diesem verschoben ist, wobei in dem Konvektionsabschnitt mehrere Gruppen von Konvektionsrohren (1) angeordnet sind, um das Kohlenwasserstoff-Ausgangsmaterial vorzuheizen;
c) einem horizontal angeordneten Übergangsabschnitt (6), der zwischen dem Strahlungsabschnitt (3) und dem Konvektionsabschnitt (2) angeschlossen ist; **dadurch gekennzeichnet, dass**
die mehreren Gruppen von Strahlungsrohren (7) Typ 2-1 oder Typ 4-1 von verzweigten Rohren mit zwei Durchgängen sind, wobei der Durchmesser der Rohre mit erstem Durchgang verschieden von dem der Rohre mit zweitem Durchgang ist, die Rohre mit erstem Durchgang und die Rohre mit zweitem Durchgang verschiedener Gruppen in zwei parallelen Ebenen angeordnet sind, und die Projektion eines jeden Rohrs mit zweitem Durchgang der Mittelposition der Projektionsverbindungslinie der beiden dazu benachbarten Rohre mit erstem Durchgang entspricht, wobei die Struktur jedes Rohrs mit erstem Durchgang und mit zweitem Durchgang dieselbe ist.

2. Pyrolyseofen nach Anspruch 1, wobei der Abstand zwischen zwei benachbarten Strahlungsrohren (7) das 1.8 bis 6.0 -fache des äußeren Durchmessers der Strahlungsrohre derselben Ebene ist.

3. Pyrolyseofen nach Anspruch 1, wobei der Abstand zwischen zwei benachbarten Strahlungsrohren (7) das 1.8 bis 4.2 -fache des äußeren Durchmessers der Strahlungsrohre derselben Ebene ist.

4. Pyrolyseofen nach Anspruch 1, wobei der Abstand zwischen zwei benachbarten Strahlungsrohren (7) das 2.0 bis 2.8 -fache des äußeren Durchmessers der Strahlungsrohre derselben Ebene ist.

5. Pyrolyseofen nach Anspruch 1, wobei der Abstand zwischen den Ebenen, in denen die ersten Durchgangsrohre und die zweiten Durchgangsrohre jeder Gruppe von Strahlungsrohren (7) jeweils angeordnet sind, 100-600mm ist.

6. Pyrolyseofen nach Anspruch 1, wobei der Abstand zwischen den Ebenen, in denen die ersten Durchgangsrohre und die zweiten Durchgangsrohre jeder Gruppe von Strahlungsrohren (7) jeweils angeordnet sind, 200-500mm ist.

7. Pyrolyseofen nach Anspruch 1, wobei der Abstand zwischen den Ebenen, in denen die ersten Durchgangsrohre und die zweiten Durchgangsrohre jeder Gruppe von Strahlungsrohren (7) jeweils angeordnet sind, 300-400mm ist.

8. Pyrolyseofen nach Anspruch 1, wobei untere Brenner (8) und obere Brenner (9) gleichzeitig im Strahlungsabschnitt (3) angeordnet sind, und wobei sich des weiteren der Übergangsabschnitt (6) von einem mittleren oberen Bereich einer Seitenwand des Strahlungsabschnitts (3) aus erstreckt und mit einem unteren Bereich des Konvektionsabschnitts (2) verbunden ist.

9. Pyrolyseofen nach Anspruch 8, wobei die obere Wand des Übergangsabschnitts (6) unterhalb der oberen Wand des Strahlungsabschnitts (3) angeordnet ist und ihr Abstand H vom Wärmezufuhrverhältnis R der oberen/unteren Brenner (9, 8) bestimmt wird, wenn sich R in einem Bereich von 1:9 bis 7:3 ändert, ist H 10% bis 50% der Gesamthöhe des Strahlungsabschnitts (3).

10. Pyrolyseofen nach Anspruch 8, wobei wenn sich R in einem Bereich von 2:8 bis 6:4 ändert, ist H 10% bis 40% der Gesamthöhe des Strahlungsabschnitts (3).

11. Pyrolyseofen nach Anspruch 8, wobei wenn sich R in einem Bereich von 2.5:7.5 bis 5:5 ändert, ist H 15% bis 40% der Gesamthöhe des Strahlungsabschnitts (3).

12. Pyrolyseofen nach Anspruch 8, wobei wenn sich R in einem Bereich von 3:7 bis 4:6 ändert, ist H 20% bis 40% der Gesamthöhe des Strahlungsabschnitts (3).

13. Pyrolyseofen nach Anspruch 8, wobei die Anzahl der unteren Brenner (8) gleich der Anzahl der oberen Brenner (9) ist, die oberen oder unteren Brenner symmetrisch um eine Mittellinie von oberen oder unteren Bereichen und einander entsprechend in oberen bzw. unteren Bereichen angeordnet sind.

14. Verfahren zum Hochtemperaturspalten von Kohlenwasserstoff-Ausgangsmaterial mit einem Pyrolyseofen nach einem der Ansprüche 1 bis 13, umfassend:
in einem Konvektionsabschnitt (2), Vorheizen des Kohlenwasserstoff-Ausgangsmaterials in Konvektionsrohren (1) unter Verwendung von Heizgas eines Übergangsabschnitts, das aus einem Strahlungsabschnitt (3) kommt; im Strahlungsabschnitt (3), Hochtemperaturspalten des vorgeheizten Kohlenwasserstoff-Ausgangsmaterials in Strahlungsrohren (7) unter Verwendung der von oberen Brennern (9) und unteren Brennern (8) zugeführten Wärme; wobei die von den unteren Brennern (8) zugeführte Wärme konstant gehalten wird, durch Einstellen der von den oberen Brennern (9) zugeführten Wärme, so dass die Temperaturerfordernisse für das Spalten verschiedener Kohlenwasserstoff-Ausgangsmaterialien erfüllt sind.

15. Die Verwendung des Pyrolyseofens nach einem der Ansprüche 1 bis 13 für das Hochtemperaturspalten von Kohlenwasserstoffen.

## Revendications

1. Four de pyrolyse comportant une disposition de tubes radiants d'un nouveau type, avec :
a) une partie radiante (3) disposée verticalement, dans laquelle des brûleurs et plusieurs groupes de tubes radiants (7) sont disposés pour le craquage à haute température d'hydrocarbures servant de matière première ;
b) une partie de convection (2) disposée verticalement, située au-dessus de la partie radiante et décalée dans le sens axial par rapport à celle-ci, laquelle partie de convection comprend plusieurs groupes de tubes à convection (1) pour préchauffer les hydrocarbures servant de matière première ;
c) une partie d'intersection (6) disposée horizontalement, raccordée entre ladite partie radiante (3) et ladite partie de convection (2) ;
**caractérisé en ce que** lesdits plusieurs groupes de tubes radiants (7) sont des tubes ramifiés à deux passages du type 2-1 ou du type 4-1 dans lesquels le diamètre des tubes de premier passage est différent de celui des tubes de deuxième passage, les tubes de premier passage et les tubes de deuxième passage de différents groupes sont disposés dans deux plans parallèles et la projection de chaque tube de deuxième passage correspond au milieu de la ligne reliant la projection des deux tubes de premier passage qui lui sont adjacents, la structure de chaque tube de premier et de deuxième passage étant la même.

2. Four de pyrolyse selon la revendication 1, dans lequel la distance entre deux tubes radiants (7) adjacents est de 1,8 à 6,0 fois le diamètre extérieur des tubes radiants dans le même plan.

3. Four de pyrolyse selon la revendication 1, dans lequel la distance entre deux tubes radiants (7) adjacents est de 1,8 à 4,2 fois le diamètre extérieur des tubes radiants dans le même plan.

4. Four de pyrolyse selon la revendication 1, dans lequel la distance entre deux tubes radiants (7) adjacents est de 2,08 à 2,8 fois le diamètre extérieur des tubes radiants dans le même plan.

5. Four de pyrolyse selon la revendication 1, dans lequel la distance entre les plans dans lesquels se trouvent respectivement lesdits tubes de premier passage et tubes de deuxième passage de chaque groupe de tubes radiants (7) est de 100 à 600 mm.

6. Four de pyrolyse selon la revendication 1, dans lequel la distance entre les plans dans lesquels se trouvent respectivement lesdits tubes de premier passage et tubes de deuxième passage dans chaque groupe de tubes radiants (7) est de 200 à 500 mm.

7. Four de pyrolyse selon la revendication 1, dans lequel la distance entre les plans dans lesquels passent respectivement lesdits tubes de premier passage et tubes de deuxième passage de chaque groupe de tubes radiants (7) est de 300 à 400 mm.

8. Four de pyrolyse selon la revendication 1, dans lequel des brûleurs inférieurs (8) et des brûleurs supérieurs (9) sont disposés ensemble dans ladite partie radiante (3), et ladite partie d'intersection (6) s'étend en outre à partir d'une partie supérieure centrale de la paroi latérale de la partie radiante (3) et se raccorde à la partie inférieure de la partie de convection (2).

9. Four de pyrolyse selon la revendication 8, dans lequel la paroi supérieure de ladite partie d'intersection (6) se trouve sous la paroi supérieure de ladite partie radiante (3), sa distance H est déterminée par le rapport d'apport calorifique R des brûleurs supérieurs et inférieurs (9, 8) et quand R varie entre 1 pour 9 et 7 pour 3, H représente 10 % à 50 % de la hauteur totale de la partie radiante (3).

10. Four de pyrolyse selon la revendication 8 dans lequel, quand R varie dans une plage de 2 pour 8 à 6 pour 4, H représente 10 % à 40 % de la hauteur totale de la partie radiante (3).

11. Four de pyrolyse selon la revendication 8 dans lequel, quand R varie dans une plage de 2,5 pour 7, 5 à 5 pour 5, H représente 15 % à 40 % de la hauteur totale de la partie radiante (3).

12. Four de pyrolyse selon la revendication 8 dans lequel, quand R varie dans une plage de 3 pour 7 à 4 pour 6, H représente 20 % à 40 % de la hauteur totale de la partie radiante (3).

13. Four de pyrolyse selon la revendication 8, dans lequel le nombre desdits brûleurs inférieurs (8) est égal au nombre desdits brûleurs supérieurs (9), les brûleurs supérieurs ou inférieurs sont disposés de façon symétrique autour de l'axe central de parties supérieure ou inférieure et correspondent les uns aux autres dans les parties supérieure et inférieure, respectivement.

14. Procédé de craquage à haute température d'hydrocarbures servant de matière première au moyen d'un four de pyrolyse selon l'une des revendications 1 à 13, comprenant : dans la partie de convection (2), un préchauffage des hydrocarbures servant de matière première dans des tubes radiants (1) en utilisant du gaz combustible de la partie d'intersection, provenant de la partie radiante (3) ; dans la partie radiante (3), le craquage à haute température des hydrocarbures servant de matière première préchauffés dans des tubes radiants (7), en utilisant la chaleur fournie par les brûleurs supérieurs (9) et les brûleurs inférieurs (8), en maintenant la chaleur fournie par les brûleurs inférieurs (8) constante au moyen d'une régulation de la chaleur fournie par les brûleurs supérieurs (9) afin de satisfaire les exigences de température du craquage de différents hydrocarbures servant de matière première.

15. Utilisation du four de pyrolyse selon l'une des revendications 1 à 13 pour le craquage à haute température d'hydrocarbures.
